# EUROPEAN PATENT APPLICATION

(11) **EP 4 769 710 A1**
(43) Date of publication of application: **01.07.2026**
(21) Application number: 25867319.3
(22) Date of filing: 22.09.2025
(51) Int. Cl.: H01M 50/233

(54) **BATTERY PACK**

(30) Priority: 11.11.2024 KR 20240158836
(71) Applicant: LG ENERGY SOLUTION, LTD., Seoul 07335 (KR)
(72) Inventor: Park, Seung Chul, Daejeon 34122 (KR); Hur, Nam Hoon, Daejeon 34122 (KR); Hwang, Jin Hyeok, Daejeon 34122 (KR); Kim, Hong Gyun, Daejeon 34122 (KR)
(74) Representative: Plasseraud IP
(86) International application number: PCT/KR2025/014792
(87) International publication number: WO 2026/100993

(57) **Abstract**

According to exemplary embodiments, a battery pack is provided. The battery pack may include a pack housing including a base plate, a center beam extending in a first direction and on the base plate, and a cross beam on the base plate crossing the center beam and extending in a second direction perpendicular to the first direction; a battery cell assembly on the base plate; and a first adhesive layer between the cross beam and the base plate.

## Description

### [Technical Field]

The present disclosure relates to a battery pack. This application claims the benefit of priority from Korean Patent Application No. 10-2024-0158836, filed on November 11, 2024, the entire contents disclosed therein are incorporated by reference into this disclosure.

### [Background]

Unlike primary batteries, secondary batteries can be charged and discharged multiple times. Secondary batteries are widely used as energy sources for various wireless devices such as handsets, laptops, wireless vacuum cleaners, etc. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are expanding from mobile devices to mobility.

The trend in technological development of secondary batteries for mobility is the improvement of energy density and safety. Here, the energy density of a secondary battery is a value obtained by dividing the maximum electrical energy that the secondary battery can store by the mass of the secondary battery. Since the high energy density of secondary batteries is directly linked to the driving efficiency and cruising distance of mobility, various studies are being conducted to improve the energy density of secondary batteries.

One of the major solutions to increase the energy density of secondary batteries is a moduleless type battery pack (or cell-to-pack structure). Since a moduleless type battery pack omits a module covering battery cells, the mass of the battery pack can be dramatically reduced.

### [Summary]

### [Technical Problem]

The technical problem to be solved by the present disclosure is to provide a battery pack with improved impact resistance and safety.

### [Technical Solution]

According to exemplary embodiments of the present disclosure for solving the above-described problem, a battery pack is provided. The battery pack may include a pack housing including a base plate, a center beam extending in a first direction and on the base plate, and a cross beam on the base plate crossing the center beam and extending in a second direction perpendicular to the first direction; a battery cell assembly on the base plate; and a first adhesive layer between the cross beam and the base plate.

The battery cell assembly may further include a cell stack including a plurality of battery cells arranged in the first direction; and a side beam on a side surface of the cell stack in the first direction. The battery pack may further include bolts fastening the side beam to the cross beam.

Each of the bolts may be spaced apart from the base plate in a third direction respectively perpendicular to the first and second directions.

The side beam may include a plurality of recess portions respectively accommodating the bolts.

The battery pack may further include a bolt fastening the cross beam to the center beam.

The battery pack may further include a second adhesive layer between the center beam and the cross beam.

The pack housing may further include a plurality of sidewalls on the base plate parallel to the center beam. The battery pack may further include welding layers between each of the plurality of sidewalls and the cross beam.

The battery pack may further include a welding layer between the center beam and the cross beam.

The first adhesive layer may include a plurality of adhesive patterns spaced apart in the second direction. The battery pack may further include a plurality of welding patterns spaced apart in the second direction between the cross beam and the base plate. The adhesive patterns and the welding patterns may be alternately arranged.

According to exemplary embodiments of the present disclosure for solving the above-described problem, a battery pack is provided. The battery pack may include a base plate including cooling passages; a center beam extending in a first direction and on the base plate; a cross beam on the base plate crossing the center beam and extending in a second direction perpendicular to the first direction; a battery cell assembly on the base plate, wherein the battery cell assembly includes a cell stack including a plurality of battery cells arranged in the first direction, and a side beam on a side surface of the cell stack in the first direction; and first bolts fastening the side beam to the cross beam. Each of the first bolts may be spaced apart from the cooling passages in a third direction perpendicular to the first and second directions.

The battery pack may further include an adhesive layer between the base plate and the cross beam.

The battery pack may further include an adhesive layer between the center beam and the cross beam.

The battery pack may further include a welding layer between the center beam and the cross beam.

The battery pack may further include sidewalls perpendicular to the base plate and the cross beam, respectively; and welding layers between the cross beam and the sidewalls.

The side beam may include a plurality of recess portions accommodating each of the first bolts.

### [Advantageous Effects]

According to exemplary embodiments of the present disclosure, by assembling a battery pack by bolting a side beam to a cross beam welded and/or adhesively bonded to a pack housing, the impact resistance of the battery pack can be improved. In addition, by expanding cooling passages, the cooling performance of the battery pack can be enhanced to improve safety.

The effects that can be obtained in exemplary embodiments of the present disclosure are not limited to the above-described effects, and other effects not mentioned can be derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a top view illustrating a battery pack according to exemplary embodiments.
FIG. 2 is a cross-sectional view illustrating a battery pack according to exemplary embodiments.
FIG. 3 is a cross-sectional view illustrating a battery pack according to exemplary embodiments.
FIG. 4 is a cross-sectional view illustrating a battery pack according to exemplary embodiments.
FIG. 5 is a cross-sectional view illustrating a battery pack according to exemplary embodiments.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (First Embodiment)

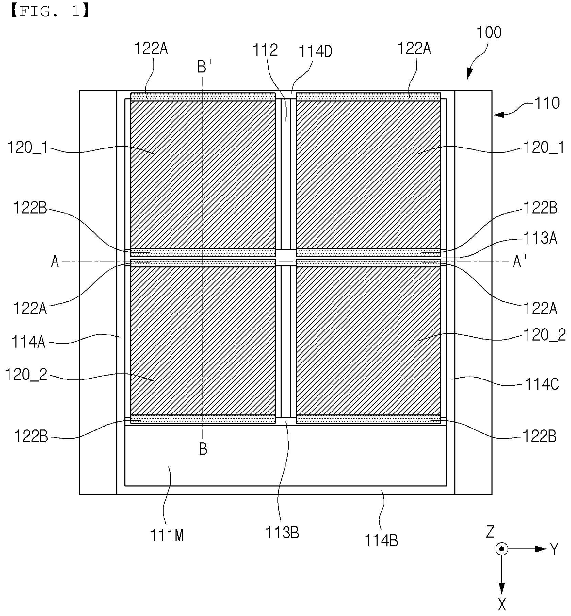

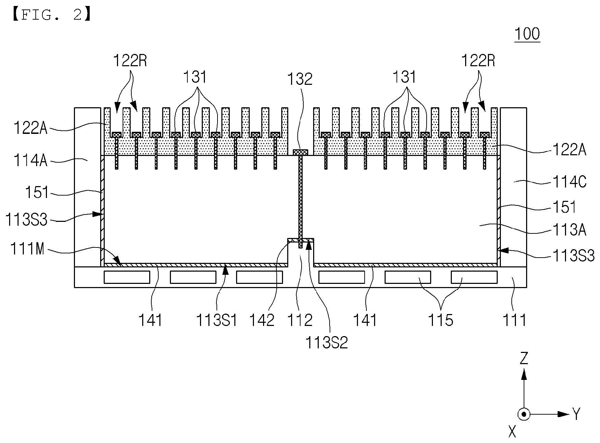

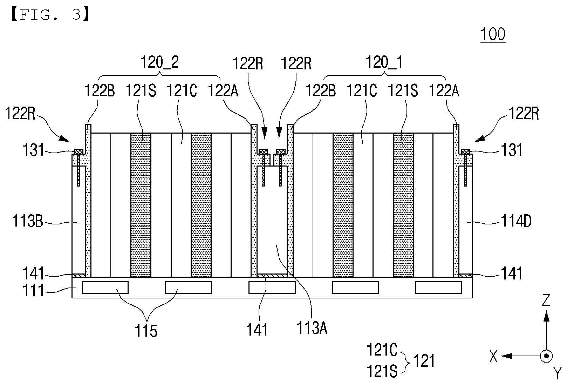

FIG. 1 is a top view illustrating a battery pack 100 according to exemplary embodiments. FIG. 2 and FIG. 3 are cross-sectional views illustrating a battery pack 100 according to exemplary embodiments. FIG. 2 illustrates a cross-section along A-A' of FIG. 1. FIG. 3 illustrates a cross-section along B-B' of FIG. 1. In FIG. 1, illustration of bolts 131, 132 of FIG. 2 and FIG. 3 is omitted.

Referring to FIG. 1 to FIG. 3, the battery pack 100 may include a pack housing 110 and battery cell assemblies 120_1, 120_2. The battery pack 100 may be a final form of a battery system mounted on mobility and the like.

The pack housing 110 may provide a space for disposing a plurality of battery cell assemblies 120_1, 120_2. The pack housing 110 may include a base plate 111, a center beam 112, cross beams 113A, 113B, and sidewalls 114A, 114B, 114C, 114D.

Two directions substantially parallel to a mounting surface 111M of the base plate 111 are defined as an X direction and a Y direction, and a direction substantially perpendicular to the mounting surface 111M of the base plate 111 is defined as a Z direction. Each of the X direction, the Y direction, and the Z direction may be substantially perpendicular to each other. Unless otherwise stated, the definition of directions is the same for the following diagrams.

The center beam 112 may be on the base plate 111. According to exemplary embodiments, the center beam 112 may protrude from the mounting surface 111M of the base plate 111. The center beam 112 may extend in the X direction. The center beam 112 may separate the battery cell assemblies 120_1, 120_2 in the Y direction.

The cross beams 113A, 113B may be on the base plate 111. Each of the cross beams 113A, 113B may cross the center beam 112. Each of the cross beams 113A, 113B may extend in the Y direction. Each of the cross beams 113A, 113B may separate the battery cell assemblies 120_1, 120_2 in the X direction.

The sidewalls 114A, 114B, 114C, 114D may be connected to the base plate 111 and may be substantially perpendicular to the base plate 111. The sidewalls 114A, 114B, 114C, 114D may extend along an edge of the base plate 111. The sidewalls 114A, 114B, 114C, 114D may surround the center beam 112, the cross beams 113A, 113B, and the battery cell assemblies 120_1, 120_2. Each of the sidewalls 114A, 114C may be substantially parallel to the center beam 112. Each of the sidewalls 114A, 114C may be substantially perpendicular to each of the cross beams 113A, 113B. Each of the sidewalls 114B, 114D may be substantially perpendicular to the center beam 112. Each of the sidewalls 114B, 114D may be substantially parallel to each of the cross beams 113A, 113B.

Each of the cross beams 113A, 113B may be bonded to the pack housing 110 by adhesive layers 141, 142 and welding layers 151.

Each of the cross beams 113A, 113B may be bonded to the base plate 111 by an adhesive layer 141. The adhesive layer 141 may be interposed between the base plate 111 and each of the cross beams 113A, 113B. The adhesive layer 141 may be in contact with the mounting surface 111M of the base plate 111. The adhesive layer 141 may be in contact with a surface 113S1 of each of the cross beams 113A, 113B. The adhesive layer 141 may include at least one of epoxy, polyurethane, acrylic, and silicone, but the type of the adhesive layer 141 is not limited thereto.

Each of the cross beams 113A, 113B may be bonded to the center beam 112 by an adhesive layer 142. The adhesive layer 142 may be interposed between the center beam 112 and each of the cross beams 113A, 113B. The adhesive layer 142 may be in contact with an upper surface of the center beam 112. The adhesive layer 142 may be in contact with a surface 113S2 of each of the cross beams 113A, 113B. Although FIG. 2 illustrates an embodiment in which the adhesive layer 142 is in contact with the upper surface of the center beam 112, the present disclosure is not limited thereto, and the adhesive layer 142 may extend to be in contact with the upper surface and both side surfaces of the center beam 112. The adhesive layer 142 may include at least one of epoxy, polyurethane, acrylic, and silicone, but the type of the adhesive layer 142 is not limited thereto.

Each of the cross beams 113A, 113B may be bonded to the center beam 112 by a bolt 132. The bolt 132 may be configured to penetrate each of the cross beams 113A, 113B and the adhesive layer 142 to fasten each of the cross beams 113A, 113B to the center beam 112. The bolt 132 may be spaced apart from cooling passages 115 in the Z direction.

Each of the cross beams 113A, 113B may be bonded to the sidewalls 114A, 114C by welding layers 151. The welding layers 151 may be interposed between each of the cross beams 113A, 113B and the sidewall 114A. The welding layers 151 may be interposed between each of the cross beams 113A, 113B and the sidewall 114C. The welding layers 151 may be in contact with side surfaces 113S3 of each of the cross beams 113A, 113B. The welding layers 151 may be in contact with an inner surface of the sidewall 114A. The welding layers 151 may be in contact with an inner surface of the sidewall 114C. The welding layers 151 may be formed by any one of Metal Inert Gas (MIG) welding, resistance welding, laser welding, and ultrasonic welding. However, the method of forming the welding layers 151 is not limited thereto.

The cooling passages 115 may be below the battery cell assemblies 120_1, 120_2. The cooling passages 115 may overlap the battery cell assemblies 120_1, 120_2 in the Z direction. According to exemplary embodiments, the cooling passages 115 may be embedded in the base plate 111. The cooling passages 115 may provide a passage for flow of a coolant such as water. The coolant flowing through the cooling passages 115 may absorb heat generated from the battery cell assemblies 120_1, 120_2 to cool the battery cell assemblies 120_1, 120_2.

Each of the battery cell assemblies 120_1, 120_2 may include battery cells 121C, separators 121S, and side beams 122A, 122B. According to exemplary embodiments, each of the battery cell assemblies 120_1, 120_2 may not include a module frame.

A plurality of battery cells 121C and a plurality of separators 121S may form a cell stack 121. According to exemplary embodiments, each of the plurality of battery cells 121C may be bidirectional cells. That is, positive electrode terminals of the plurality of battery cells 121C may be disposed at respective one ends, and negative electrode terminals of the plurality of battery cells 121C may be disposed at respective other ends. Those skilled in the art will be able to easily arrive at embodiments in which each of the plurality of battery cells 121C is a unidirectional cell based on what is described herein.

Each of the plurality of battery cells 121C may include an electrode assembly, an electrolyte, and a case covering them. The case may be any one of a pouch case, a cylindrical case, and a prismatic case. The pouch case may include an aluminum laminate sheet. The prismatic case and the cylindrical case may include a metal material such as aluminum. The prismatic case may have a rectangular parallelepiped shape. The cylindrical case may have a cylindrical shape.

The electrode assembly embedded in the case includes a positive electrode, a negative electrode, and a separator interposed between the positive electrode and the negative electrode. The electrode assembly may be any one of a jelly roll type and a stack type according to an assembly form. A jelly roll type electrode assembly may include a winding structure of a positive electrode, a negative electrode, and a separator interposed between the positive electrode and the negative electrode. A stack type electrode assembly includes a plurality of positive electrodes, a plurality of negative electrodes sequentially stacked, and a plurality of separators interposed therebetween. According to exemplary embodiments, a plurality of battery cells 121C connected in parallel may constitute a plurality of banks, and the plurality of banks may be connected in series. Depending on a number of battery cells 121C included in each of the plurality of banks, an output current of each of the battery cell assemblies 120_1, 120_2 may be determined. Depending on a number of the plurality of banks connected in series with each other, an output voltage of each of the battery cell assemblies 120_1, 120_2 may be determined.

The plurality of separators 121S may be interposed between the plurality of battery cells 121C. The plurality of separators 121S may include a compressible material. The plurality of separators 121S may absorb swelling of the plurality of battery cells 121C.

According to exemplary embodiments, the plurality of separators 121S may be thermal barriers. According to exemplary embodiments, each of the plurality of separators 121S may have a high melting temperature and low thermal conductivity. According to exemplary embodiments, each of the plurality of separators 121S may include a flame-retardant material such as ceramic and coated glass material. According to exemplary embodiments, the plurality of separators 121S may be configured to release a fire retarding material and a fire extinguishing agent when a thermal runaway event occurs.

In this example, the battery cell assemblies 120_1, 120_2 are arranged in 2 rows and 2 columns. Accordingly, the battery cell assemblies 120_1, 120_2 may be said to be arranged in 2 * 2. Those skilled in the art will be able to easily arrive at a battery pack including battery cell assemblies 120_1, 120_2 arranged in M * N based on what is described herein. Here, each of M and N is an arbitrary integer of 2 or more.

The side beams 122A, 122B may be on both side surfaces of the cell stack 121 in the X direction. The side beams 122A, 122B may be fixed to the cell stack 121 by an adhesive material and the like. The side beams 122A, 122B may be spaced apart from each other with the cell stack 121 therebetween. The side beams 122A, 122B may overlap the battery cells 121C and the separators 121S in the X direction.

Each of the side beams 122A, 122B may have a symmetrical shape with respect to the cell stack 121. Each of the side beams 122A, 122B may have a Γ shape. The side beam 122A of the battery cell assembly 120_1 may have a complementary shape to the sidewall 114D. The side beam 122B of the battery cell assembly 120_1 may have a complementary shape to the cross beam 113A. The side beam 122A of the battery cell assembly 120_2 may have a complementary shape to the cross beam 113A. The side beam 122B of the battery cell assembly 120_2 may have a complementary shape to the cross beam 113B. According to exemplary embodiments, each of the side beams 122A, 122B may be extrusion manufactured.

The side beams 122A, 122B may be fastened to the pack housing 110 by bolts 131. Each of the side beams 122A, 122B may include a plurality of recess portions 122R. Each of the bolts 131 may be accommodated in each of the recess portions 122R. The bolts 131 may penetrate the side beams 122A, 122B to fasten the side beams 122A, 122B to the cross beams 113A, 113B or the sidewall 114D. The side beam 122A of the battery cell assembly 120_1 may be fastened to the sidewall 114D. The side beam 122B of the battery cell assembly 120_1 may be fastened to the cross beam 113A. The side beam 122A of the battery cell assembly 120_2 may be fastened to the cross beam 113A. The side beam 122B of the battery cell assembly 120_2 may be fastened to the cross beam 113B. The bolts 131 may be spaced apart from the base plate 111 in the Z direction. The bolts 131 may be spaced apart from the cooling passages 115 in the Z direction.

The side beam 122B of the battery cell assembly 120_1 may face the side beam 122A of the battery cell assembly 120_2. The side beam 122B of the battery cell assembly 120_1 may be spaced apart from the side beam 122A of the battery cell assembly 120_2 in the X direction.

According to exemplary embodiments, in each of the battery cell assemblies 120_1, 120_2, the plurality of recess portions 122R of the side beam 122A may face a direction opposite to the plurality of recess portions 122R of the side beam 122B with respect to the cell stack 121. According to exemplary embodiments, each of the plurality of recess portions 122R of the side beam 122B of the battery cell assembly 120_1 may face each of the plurality of recess portions 122R of the side beam 122A of the battery cell assembly 120_2. According to exemplary embodiments, each of the plurality of recess portions 122R of the side beam 122B of the battery cell assembly 120_1 may be aligned with each of the plurality of recess portions 122R of the side beam 122A of the battery cell assembly 120_2 in the X direction.

The width of the cross beam 113A in the X direction may be greater than the width of the cross beam 113B in the X direction. The width of the cross beam 113A in the X direction may be greater than the width of the sidewall 114D in the X direction. According to exemplary embodiments, the width of the cross beam 113B in the X direction may be substantially the same as the width of the sidewall 114D in the X direction.

The height of each of the cross beams 113A, 113B in the Z direction may be substantially the same as the height of the sidewall 114D. The height of each of the cross beams 113A, 113B in the Z direction may be smaller than the height of each of the sidewalls 114A, 114B, 114C in the Z direction. The height of the sidewall 114D in the Z direction may be smaller than the height of each of the sidewalls 114A, 114B, 114C in the Z direction.

A height of each of the side beams 122A, 122B in the Z direction may be substantially the same as the height of each of the sidewalls 114A, 114B, 114C in the Z direction. The height of each of the side beams 122A, 122B in the Z direction may be greater than the height of the sidewall 114D in the Z direction. The height of each of the side beams 122A, 122B in the Z direction may be greater than the height of each of the cross beams 113A, 113B in the Z direction.

The height of the cell stack 121 in the Z direction may be greater than the height of each of the cross beams 113A, 113B in the Z direction. The height of the cell stack 121 in the Z direction may be greater than the height of the sidewall 114D in the Z direction. The height of the cell stack 121 in the Z direction may be smaller than the height of each of the side beams 122A, 122B in the Z direction. The height of the cell stack 121 in the Z direction may be smaller than the height of the sidewalls 114A, 114B, 114C in the Z direction.

The battery pack 100 may be manufactured by bonding the cross beams 113A, 113B to the pack housing 110, and then bonding the battery cell assemblies 120_1, 120_2 to the cross beams 113A, 113B.

According to exemplary embodiments, the adhesive layer 141 may be applied to the surface 113S1 of each of the cross beams 113A, 113B, and the adhesive layer 142 may be applied to the surface 113S2 to bond each of the cross beams 113A, 113B to the pack housing 110. Thereafter, the welding layers 151 may be formed in a gap between each of the cross beams 113A, 113B and the sidewalls 114A, 114C using MIG welding and the like. In addition, each of the cross beams 113A, 113B may be fastened to the center beam 112 with the bolt 132. After mounting each of the battery cell assemblies 120_1, 120_2 inside the pack housing 110, the side beams 122A, 122B of each of the battery cell assemblies 120_1, 120_2 may be bolt-fastened to the pack housing 110 using the bolts 131.

That is, each of the cross beams 113A, 113B may be bonded to the pack housing 110 by the adhesive layers 141, 142, the welding layers 151, and the bolt 132. Each of the side beams 122A, 122B may be bonded to each of the cross beams 113A, 113B and the sidewall 114D bonded to the pack housing 110 by the bolts 131. Accordingly, even if each of the bolts 131 is not directly fastened to the base plate 111, the side beams 122A, 122B may be fixed to the pack housing 110.

As the bolts 131 are spaced apart from the base plate 111 in the Z direction, constraints on the shape of the cooling passages 115 of the base plate 111 may be reduced. Due to this, the cooling passages 115 may be expanded to improve cooling performance of the battery pack 100 by the cooling passages 115.

In addition, since each of the cross beams 113A, 113B is bonded to the sidewalls 114A, 114C by the welding layers 151, the battery pack 100 may not include side bolts fastening the cross beams 113A, 113B to the sidewalls 114A, 114C. Accordingly, even if vibration or shock in the Z direction is applied to the battery pack 100, a problem in which the side bolts are damaged by shear force may be prevented. In addition, since an assembly process due to fastening of the side bolts is excluded, efficiency of the assembly process may be improved.

### (Second Embodiment)

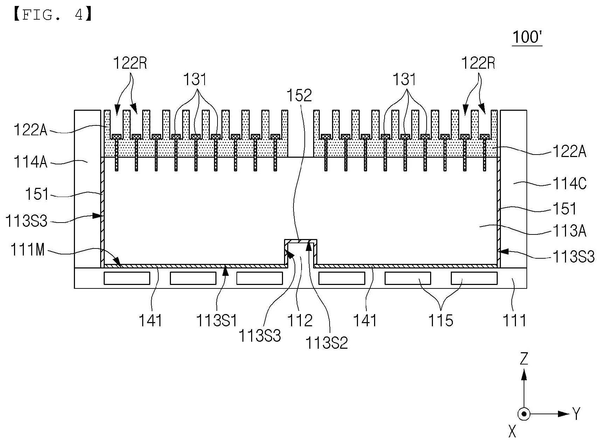

FIG. 4 is a cross-sectional view illustrating a battery pack 100' according to exemplary embodiments. FIG. 4 illustrates a cross-section along A-A' of FIG. 1.

In FIG. 4, components having the same reference numerals as those in FIG. 1 to FIG. 3 may apply the description described above in the first embodiment, and the same description will be omitted. Hereinafter, components of the second embodiment that are different from the first embodiment will be mainly described.

Referring to FIG. 1 and FIG. 4, the battery pack 100' may include a welding layer 152 between a center beam 112 and each of cross beams 113A, 113B. The welding layer 152 may be in contact with surfaces 113S2, 113S3 of each of the cross beams 113A, 113B. The welding layer 152 may be in contact with an upper surface and both side surfaces of the center beam 112. The battery pack 100' may include the welding layer 152 and may not include bolts (132 in FIG. 2) fastening the center beam 112 and each of the cross beams 113A, 113B.

The battery pack 100' may be manufactured by bonding the cross beams 113A, 113B to a pack housing 110, and then bonding battery cell assemblies 120_1, 120_2 to the cross beams 113A, 113B.

According to exemplary embodiments, an adhesive layer 141 may be applied to a surface 113S1 of each of the cross beams 113A, 113B to bond each of the cross beams 113A, 113B to the pack housing 110. Thereafter, welding layers 151 may be formed in a gap between each of the cross beams 113A, 113B and sidewalls 114A, 114C using MIG welding and the like. In addition, the welding layer 152 may be formed in gaps between each of the cross beams 113A, 113B and the center beam 112 using MIG welding and the like. After mounting each of the battery cell assemblies 120_1, 120_2 inside the pack housing 110, each of side beams 122A, 122B of each of the battery cell assemblies 120_1, 120_2 may be bolt-fastened to the cross beams 113A, 113B and a sidewall 114D using bolts 131. However, the manufacturing method and sequence of the battery pack 100' are not limited to those described above, and may be variously changed.

### (Third Embodiment)

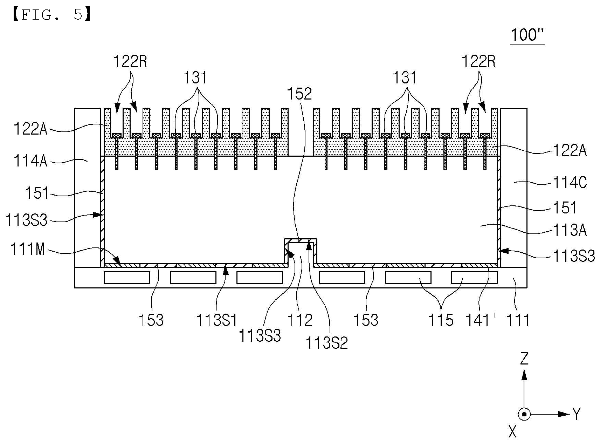

FIG. 5 is a cross-sectional view illustrating a battery pack 100" according to exemplary embodiments. FIG. 5 illustrates a cross-section along A-A' of FIG. 1.

In FIG. 5, components having the same reference numerals as those in FIG. 1 to FIG. 3 may apply the description described above in the first embodiment, and the same description will be omitted. Hereinafter, components of the third embodiment that are different from the first embodiment will be mainly described.

Referring to FIG. 1 and FIG. 5, the battery pack 100" may further include a welding layer 152 between a center beam 112 and each of cross beams 113A, 113B. The welding layer 152 may be in contact with surfaces 113S2, 113S3 of each of the cross beams 113A, 113B. The welding layer 152 may be in contact with an upper surface and both side surfaces of the center beam 112. The battery pack 100" may include the welding layer 152 and may not include bolts (132 in FIG. 2) fastening the center beam 112 and each of the cross beams 113A, 113B.

Each of the cross beams 113A, 113B may be bonded to a base plate 111 by adhesive patterns 141' and welding patterns 153. The adhesive patterns 141' and the welding patterns 153 may be interposed between the base plate 111 and each of the cross beams 113A, 113B.

The adhesive patterns 141' may be spaced apart from each other in a Y direction. According to exemplary embodiments, the adhesive patterns 141' may be arranged at equal intervals. The welding patterns 153 may be spaced apart from each other in the Y direction. According to exemplary embodiments, the welding patterns 153 may be arranged at equal intervals. The adhesive patterns 141' and the welding patterns 153 may be alternately arranged in the Y direction.

The adhesive patterns 141' and the welding patterns 153 may be in contact with a mounting surface 111M of the base plate 111. The adhesive patterns 141' and the welding patterns 153 may be in contact with a surface 113S1 of each of the cross beams 113A, 113B.

According to exemplary embodiments, the adhesive patterns 141' may be applied to the surface 113S1 of each of the cross beams 113A, 113B to bond each of the cross beams 113A, 113B to a pack housing 110. Thereafter, welding layers 151 may be formed in a gap between each of the cross beams 113A, 113B and sidewalls 114A, 114C using MIG welding and the like. The welding layer 152 may be formed in gaps between each of the cross beams 113A, 113B and the center beam 112 using MIG welding and the like. The welding patterns 153 may be formed in gaps between each of the cross beams 113A, 113B and the base plate 111 using MIG welding and the like. After mounting each of battery cell assemblies 120_1, 120_2 inside the pack housing 110, each of side beams 122A, 122B of each of the battery cell assemblies 120_1, 120_2 may be bolt-fastened to the cross beams 113A, 113B and a sidewall 114D using bolts 131. However, the manufacturing method and sequence of the battery pack 100" are not limited to those described above, and may be variously changed.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A battery pack comprising:
a pack housing comprising a base plate, a center beam extending in a first direction and on the base plate, and a cross beam on the base plate crossing the center beam and extending in a second direction perpendicular to the first direction;
a battery cell assembly on the base plate; and
a first adhesive layer between the cross beam and the base plate.

2. The battery pack of claim 1, wherein the battery cell assembly further comprises:
a cell stack comprising a plurality of battery cells arranged in the first direction; and
a side beam on a side surface of the cell stack in the first direction; and
wherein the battery pack further comprises bolts fastening the side beam to the cross beam.

3. The battery pack of claim 2, wherein each of the bolts is spaced apart from the base plate in a third direction respectively perpendicular to the first and second directions.

4. The battery pack of claim 2, wherein the side beam comprises a plurality of recess portions respectively accommodating the bolts.

5. The battery pack of claim 1, further comprising a bolt fastening the cross beam to the center beam.

6. The battery pack of claim 1, further comprising a second adhesive layer between the center beam and the cross beam.

7. The battery pack of claim 1, wherein the pack housing further comprises a plurality of sidewalls on the base plate parallel to the center beam; and
wherein the battery pack further comprises welding layers between each of the plurality of sidewalls and the cross beam.

8. The battery pack of claim 1, further comprising a welding layer between the center beam and the cross beam.

9. The battery pack of claim 1, wherein the first adhesive layer comprises a plurality of adhesive patterns spaced apart in the second direction;
wherein the battery pack further comprises a plurality of welding patterns spaced apart in the second direction between the cross beam and the base plate; and
wherein the adhesive patterns and the welding patterns are alternately arranged.

10. A battery pack comprising:
a base plate comprising cooling passages;
a center beam extending in a first direction and on the base plate;
a cross beam on the base plate crossing the center beam and extending in a second direction perpendicular to the first direction;
a battery cell assembly on the base plate, wherein the battery cell assembly comprises a cell stack comprising a plurality of battery cells arranged in the first direction, and a side beam on a side surface of the cell stack in the first direction; and
first bolts fastening the side beam to the cross beam,
wherein each of the first bolts is spaced apart from the cooling passages in a third direction perpendicular to the first and second directions.

11. The battery pack of claim 10, further comprising an adhesive layer between the base plate and the cross beam.

12. The battery pack of claim 10, further comprising an adhesive layer between the center beam and the cross beam.

13. The battery pack of claim 10, further comprising a welding layer between the center beam and the cross beam.

14. The battery pack of claim 10, further comprising: sidewalls perpendicular to the base plate and the cross beam, respectively; and
welding layers between the cross beam and the sidewalls.

15. The battery pack of claim 10, wherein the side beam comprises a plurality of recess portions accommodating each of the first bolts.
